# EUROPEAN PATENT APPLICATION

(11) **EP 3 627 769 A1**
(43) Date of publication of application: **25.03.2020**
(21) Application number: 19182444.0
(22) Date of filing: 25.06.2019
(51) Int. Cl.: H04L 12/24, H04L 12/755, H04L 12/721, H04L 12/931, H04L 29/06

(54) **SWITCH CONFIGURATION BASED ON TEMPLATES**

(30) Priority: 19.09.2018 US 201816135261
(71) Applicant: INTEL Corporation, Santa Clara, CA 95054 (US)
(72) Inventor: LOUZOUN, Eliel, 9722931 Jerusalem (IL); HABER, Nir, 3440303 Haifa (IL)
(74) Representative: 2SPL Patentanwälte PartG mbB

(57) **Abstract**

A network switch circuit associated with a communication network is disclosed. The network switch circuit comprises a switching circuit configured to receive a switch configuration request comprising a configuration command comprising information on a switching rule associated with the network switch circuit; and a configuration template comprising a real packet header comprising real values for one or more fields required for the execution of the switching rule. In some embodiments, the configuration template is indicative of a real network data packet format. In some embodiments, the switching circuit is further configured to process the switch configuration request, in order to apply the switching rule to an incoming network data packet.

## Description

### FIELD

The present disclosure relates to communication networks, and in particular, to a system and method for the configuration of network switches.

### BACKGROUND

A communication network is a network of a group of devices comprising hardware and software connected together, whether in the same geographical location or globally to facilitate communication and information sharing. Network switches are the foundation of most communication networks. A network switch is a computer networking device that connects devices together on a computer network by using packet switching to receive, process, and forward data to the destination device. Network switches allow devices on a network to communicate with each other, as well as with other networks, creating a network of shared resources. Through information sharing and resource allocation, network switches increase the capacity and speed of communication networks.

### BRIEF DESCRIPTION OF THE DRAWINGS

Some examples of circuits, apparatuses and/or methods will be described in the following by way of example only. In this context, reference will be made to the accompanying Figures.
Fig. 1 illustrates a simplified block diagram of a network switch circuit, according to one embodiment of the disclosure.
Fig. 2 illustrates an example block diagram of a configuration request queue, according to one embodiment of the disclosure.
Fig. 3 illustrates an example implementation of a network switch circuit, according to one embodiment of the disclosure.
Fig. 4 illustrates a flow chart of a method for a network switch circuit, according to one embodiment of the disclosure.

### DETAILED DESCRIPTION

In one embodiment of the disclosure, a network switch circuit is disclosed. The network switch circuit comprises a switching circuit configured to receive a switch configuration request comprising a configuration command comprising information on a switching rule associated with the network switch circuit; and a configuration template comprising a real packet header comprising real values for one or more fields required for the execution of the switching rule. In some embodiments, the configuration template is indicative of a real network data packet format. In some embodiments, the switching circuit is further configured to process the switch configuration request, in order to apply the switching rule associated with the configuration command to an incoming network data packet.

In one embodiment of the disclosure, a network switch circuit is disclosed. The network switch circuit comprises a driver circuit configured to generate a switch configuration request comprising a configuration command comprising information on a switching rule associated with the network switch circuit; and a configuration template comprising a real packet header comprising real values for one or more fields required for the execution of the switching rule. In some embodiments, the configuration template is indicative of a real network data packet format. In some embodiments, the driver circuit is further configured to provide the switch configuration request to a switching circuit, in order to execute the switching rule associated with the switch configuration request, thereby enabling to configure the network switch circuit.

In one embodiment of the disclosure, a method for a network switch circuit is disclosed. The method comprises receiving, at a switching circuit, a switch configuration request comprising a configuration command comprising information on a switching rule associated with the network switch circuit; and a configuration template comprising a real packet header comprising real values for one or more fields required for the execution of the switching rule. In some embodiments, the configuration template is indicative of a real network data packet format. In some embodiments, the method further comprises processing, at the switching circuit, the switch configuration request, in order to apply the switching rule to an incoming network data packet.

The present disclosure will now be described with reference to the attached drawing figures, wherein like reference numerals are used to refer to like elements throughout, and wherein the illustrated structures and devices are not necessarily drawn to scale. As utilized herein, terms "component," "system," "interface," "circuit" and the like are intended to refer to a computer-related entity, hardware, software (e.g., in execution), and/or firmware. For example, a component can be a processor (e.g., a microprocessor, a controller, or other processing device), a process running on a processor, a controller, an object, an executable, a program, a storage device, a computer, a tablet PC and/or a user equipment (e.g., mobile phone, etc.) with a processing device. By way of illustration, an application running on a server and the server can also be a component. One or more components can reside within a process, and a component can be localized on one computer and/or distributed between two or more computers. A set of elements or a set of other components can be described herein, in which the term "set" can be interpreted as "one or more."

Further, these components can execute from various computer readable storage media having various data structures stored thereon such as with a module, for example. The components can communicate via local and/or remote processes such as in accordance with a signal having one or more data packets (e.g., data from one component interacting with another component in a local system, distributed system, and/or across a network, such as, the Internet, a local area network, a wide area network, or similar network with other systems via the signal).

As another example, a component can be an apparatus with specific functionality provided by mechanical parts operated by electric or electronic circuitry, in which the electric or electronic circuitry can be operated by a software application or a firmware application executed by one or more processors. The one or more processors can be internal or external to the apparatus and can execute at least a part of the software or firmware application. As yet another example, a component can be an apparatus that provides specific functionality through electronic components without mechanical parts; the electronic components can include one or more processors therein to execute software and/or firmware that confer(s), at least in part, the functionality of the electronic components.

Use of the word exemplary is intended to present concepts in a concrete fashion. As used in this application, the term "or" is intended to mean an inclusive "or" rather than an exclusive "or". That is, unless specified otherwise, or clear from conte8, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from conte8 to be directed to a singular form. Furthermore, to the event that the terms "including", "includes", "having", "has", "with", or variants thereof are used in either the detailed description and the claims, such terms are intended to be inclusive in a manner similar to the term "comprising."

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

As indicated above, network switches allow devices on a communication network to communicate with each other, as well as with other networks, creating a network of shared resources. In particular, network switches (e.g., Ethernet switches) link various network devices together by relaying network data packets (e.g., Ethernet frames) between the devices connected to the switches. Network switches are configured to utilize a set of switching rules, in order to enable the communication (e.g., forward network data packet) with the various devices in the network. In order to configure the network switches with the various switching rules, in some embodiments, the network switches include a driver circuit that manages the switching rules associated with the network switches. In some embodiments, the driver circuit is configured to provide a configuration command that provides information on the switching rule (e.g., command type, rule ID etc.) to a switching circuit, which implements the switching rule associated with the network switch. In some embodiments, a switching rule may comprise an indication on "what operation to execute" and "how to use an incoming data packet".

For example, in one example embodiment, the switching rule may comprise an indication to forward a network data packet based on media access control (MAC) addresses of the network data packet. In another embodiment, the switching rule may comprise an indication to forward a data packet based on internet protocol (IP) addresses of the network data packet. In order to enable the switching circuit to implement the switching rule, in some embodiments, the driver circuit is further configured to supply real values for the relevant fields (e.g., MAC addresses, IP addresses etc.) that is required for the implementation of a specific switching rule. In such embodiments, the switching circuit is configured to look for a match between the supplied fields and the fields of the incoming data packets, in order to implement the switching rule on the incoming data packets.

In current implementations, the driver circuit is configured to provide the relevant fields required for the implementation of the switching rule, as part of the configuration command. Therefore, in such embodiments, the configuration command includes predefined metadata (e.g., fixed list of tags, addresses and specific fields), based on the product needs. In order to add new fields after the production phase, the driver circuit has to modify the format of the configuration command. Also, switching circuit needs to be reconfigured, in order to identify the newly added fields (e.g., generation of a new microcode for the firmware that manages the network switch). Therefore, conventional implementations create the overhead of refactoring the configuration command format for any new needed switching rule support. Further, in such embodiments, there should be a predefined understanding between the driver circuit and the switching circuit on the network data packet format (e.g., layers, offsets, legitimate/supported structures etc.). Furthermore, since the configuration command has to include the predefined metadata, the processing time of the configuration command at the switching circuit is increased, which reduces the amount of configuration commands the network switch (or the switching circuit associated therewith) can process in a given time.

In order to overcome the above disadvantages, a system and a method for configuring network switches based on providing configuration templates is proposed in this disclosure. In particular, in one embodiment, a network switch comprising a driver circuit configured to provide a switch configuration request to a switching circuit associated therewith is proposed in this disclosure. In some embodiments, the switch configuration request comprises a configuration command comprising information on a switching rule to be implemented by the network switch. In some embodiments, the switch configuration request further comprises a configuration template comprising a real packet header comprising real values for one or more fields required for the execution of the switching rule. In some embodiments, the configuration template is indicative of a real network data packet format. In some embodiments, providing the configuration template along with the configuration command replaces the need to send the predefined metadata as part of the configuration command as was done in conventional implementations. This, in turn, simplifies the configuration command, thereby reducing the processing time of the configuration command. Further, separating the metadata from the configuration command, increases the flexibility of providing configuration commands, irrespective of the product requirements. Further, since the configuration template is indicative of the data packet structure, the proposed network switch eliminates the need for a predefined understanding between the driver circuit and the switching circuit on the data packet format, as was required in prior approaches.

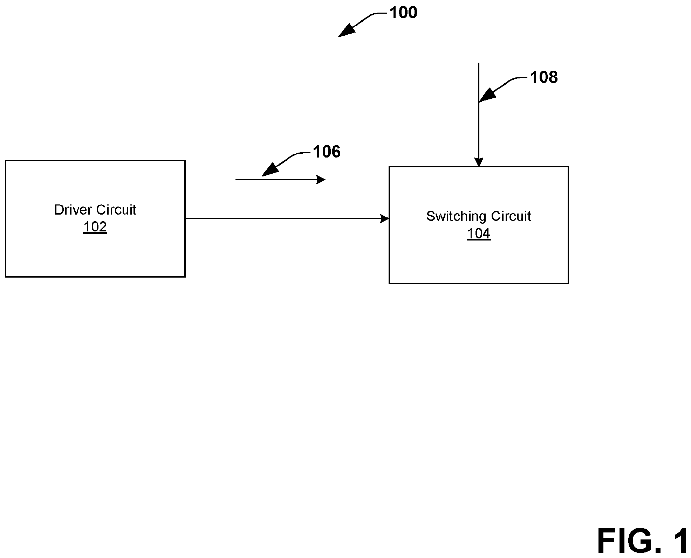

Fig. 1 illustrates a simplified block diagram of a network switch circuit 100, according to one embodiment of the disclosure. In some embodiments, the network switch circuit 100 can be included as part of the communication networks. In some embodiments, the network switch circuit 100 is configured to connect a plurality of devices to a network (e.g., local area network), via a plurality of ports associated therewith. In some embodiments, the network switch circuit 100 comprises an ethernet switch. However, other types of network switches are also contemplated to be within the scope of this disclosure. In some embodiments, the network switch circuit 100 is configured to connect a plurality of devices together based on packet switching to receive, process and forward data (i.e., network data packets) to the destination device. In some embodiments, the network switch circuit 100 is configured to utilize a set of switching rules, in order to enable the communication (i.e., forward network data packets) between the various devices connected thereto (e.g., via the ports associated therewith). In some embodiments, the set of switching rules are predefined, each switching rule having a rule ID associated therewith.

In some embodiments, the network switch circuit 100 comprises a driver circuit 102 configured to configure the network switch circuit 100 to utilize the various switching rules, in order to enable communication between the various devices connected to the network switch circuit 100. In particular, in some embodiments, the driver circuit 102 is configured to manage the set of switching rules associated with the network switch circuit 102. In some embodiments, the driver circuit 102 is configured to generate a switch configuration request 106 comprising information on the switching rule, in order to configure the network switch circuit 100 with a specific switching rule. In some embodiments, the driver circuit 102 is configured to generate the switch configuration request 106 based on receiving information from higher layers. In some embodiments, the network switch circuit 100 further comprises a switching circuit 104 configured to receive and process the switch configuration request 106, in order to implement the switching rule associated with the switch configuration request 106.

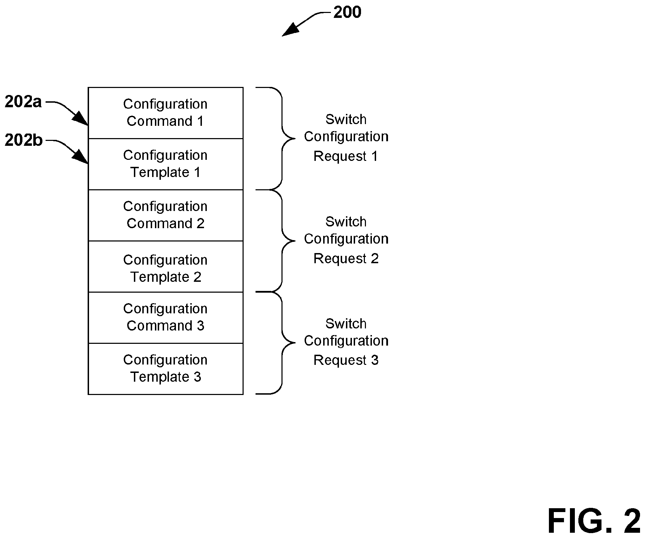

In some embodiments, the driver circuit 102 is further configured to generate a configuration request queue comprising a plurality of switch configuration requests and provide the plurality of switch configuration requests in sequence to the switching circuit 104. Fig. 2 illustrates an example block diagram of a configuration request queue 200, according to one embodiment of the disclosure. The configuration request queue 200 comprises a switch configuration request 1, a switch configuration request 2 and a switch configuration request 3 in sequence. In this example embodiment, the configuration request queue 200 is shown to include only 3 switch configuration requests. However, in other embodiments, the configuration request queue 200 may include any number of switch configuration requests. Referring back to Fig. 1, in some embodiments, each of the switch configuration requests (e.g., the switch configuration request 1, the switch configuration request 2 and the switch configuration request 3 in Fig. 2) associated with the configuration request queue are configured to configure the switching circuit 104 with a corresponding switching rule.

In some embodiments, a switching rule may comprise an indication on "what operation to execute" and "how to use an incoming data packet". In particular, in some embodiments, the switching rule may include the operation (e.g., forward, drop etc.) to be executed on an incoming network data packet (e.g., the incoming network data packet 108) and one or more identifiers associated with the incoming network data packet (e.g., specific fields like MAC address, IP address, VLAN tags etc. or other unique information) based on which the operation associated with the switching rule is to be applied. For example, in one example embodiment, the switching rule may comprise an indication to forward a data packet based on media access control (MAC) address of the incoming network data packet. In another embodiment, the switching rule may comprise an indication to forward a data packet based on internet protocol (IP) address of the incoming network data packet. In order to implement the switching rule, in some embodiments, the driver circuit 102 is further configured to supply real values for the relevant fields (e.g., MAC addresses, IP addresses etc.) that is required for the implementation of a specific switching rule, as part of the switch configuration request 106. Therefore, in some embodiments, the switch configuration request 106 comprises a configuration command (e.g., the configuration command 202a in Fig. 2) comprising information on a switching rule associated with the network switch circuit 100, and a configuration template (e.g., the configuration template 202b in Fig. 2) comprising a real packet header comprising real values for one or more fields required for the execution of the switching rule associated with the configuration command. In some embodiments, the configuration template is indicative of a real network data packet format. In some embodiments, the various configuration templates to be utilized to generate the switch configuration request are predefined and are indicated to the driver circuit 102 from higher layers.

In some embodiments, the configuration command comprises a plurality of fields, for example, a rule ID that identifies the switching rule associated with the configuration command and a command type (e.g., ADD, REMOVE, UPDATE etc.) indicative of an operation that manages the respective switching rule. In some embodiments, the switching rule identifies a specific field (e.g., MAC address, IP address, VLAN tags etc.) or a combination of fields in the incoming network packet or any other added criteria (e.g., direction of the incoming network data packet) based on which the switching rule is to be implemented. In some embodiments, the configuration command further comprises one or more unique information fields configured to give additional information like direction of the incoming packet, when the switching rule is based on this additional information. In some embodiments, the configuration template may be configured to include real values for the one or more specific fields (e.g., MAC address, IP address, VLAN tags etc.) identified within the switching rule, in order to enable the switching circuit 104 to implement the switching rule.

In one example embodiment, the command type comprises "ADD" and the rule ID identifies a switching rule that indicates to forward a network data packet based on MAC address. In this embodiment, the configuration command is configured to configure the switching circuit 104 to add a switching rule to forward an incoming network data packet based on MAC address. In such embodiments, the configuration template may be configured to include a specific MAC address in the MAC address field associated therewith, in order to enable the switching circuit 104 to implement the switching rule. In another example embodiment, the command type may comprise "REMOVE" and the rule ID identifies a switching rule that indicates to forward a network data packet based on MAC address. In this embodiment, the configuration command is configured to configure the switching circuit 104 to remove a switching rule to forward an incoming network data packet based on MAC address. In such embodiments, the switching circuit 104 may be configured to implement a default switching rule (that is predefined), in place of the removed switching rule. Therefore, in some embodiments, the switching rule associated with the configuration command comprises a switching rule identified by the rule ID (indicated within the configuration command) or a default switching rule (that is predefined).

Upon receiving the switch configuration request 106, the switching circuit 104 is configured to process the switch configuration request 106, in order to implement the switching rule associated therewith on an incoming data packet (e.g., the incoming network data packet 108). In particular, the switching circuit 104 is configured to process the configuration command and extract the values associated with the one or more relevant fields of the configuration template. Upon extracting the values associated with the one or more relevant fields of the configuration template, the switching circuit 104 is configured to apply the switching rule associated with the configuration command to the incoming network data packet, based on the extracted values. In some embodiments, applying the switching rule to the incoming network data packet comprises determining whether a match exists between the one or more relevant fields extracted from the configuration template and the respective fields associated with the incoming data packet, and applying the switching rule to the incoming network data packet, when the match is determined. In some embodiments, for example, when the switching rule comprises forwarding network data packet based on MAC address, the matched network data packets are forwarded to a port associated with the network switch circuit 100 having a MAC address indicated within the MAC address field of the matched network data packet.

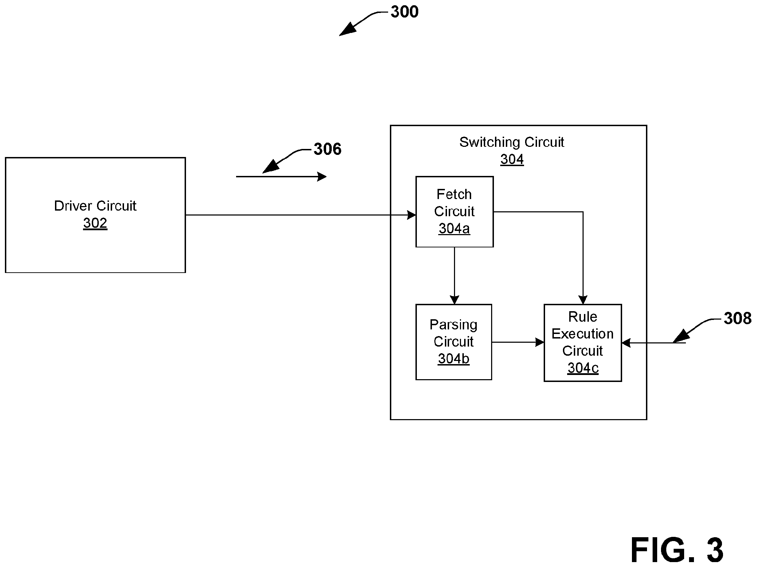

Fig. 3 illustrates an example implementation of a network switch circuit 300, according to one embodiment of the disclosure. In some embodiments, the network switch circuit 300 comprises one possible implementation of the network switch circuit 100 in Fig. 1. In some embodiments, the network switch circuit 300 is configured to connect a plurality of devices to a network (e.g., local area network), via a plurality of ports associated therewith. In some embodiments, the network switch circuit 300 is configured to connect a plurality of devices together based on packet switching to receive, process and forward data (e.g., network data packets) to the destination device. In some embodiments, the network switch circuit 300 is configured to utilize a set of switching rules, in order to enable the communication between the various devices connected thereto (e.g., via the ports associated therewith). In some embodiments, the set of switching rules are predefined, each switching rule having a rule ID associated therewith.

In some embodiments, the network switch circuit 300 comprises a driver circuit 302 configured to configure the network switch circuit 300 to utilize the various switching rules, in order to enable communication between the various devices connected to the network switch circuit 300. In particular, in some embodiments, the driver circuit 302 is configured to manage the set of switching rules associated with the network switch circuit 302. In some embodiments, the driver circuit 302 is configured to generate a switch configuration request 306 comprising information on the switching rule, in order to configure the network switch circuit 304 with a specific switching rule. In some embodiments, the driver circuit 302 is configured to generate the switch configuration request 306 based on receiving information from higher layers. In some embodiments, the driver circuit 302 may be implemented in software. However, in other embodiments, the driver circuit 302 may be implemented as software or firmware or hardware or a combination thereof. In some embodiments, the network switch circuit 300 further comprises a switching circuit 304 configured to receive and process the switch configuration request 306, in order to implement the switching rule associated with the network switch circuit 300. In some embodiments, the driver circuit 302 may be implemented as hardware. However, in other embodiments, the driver circuit 302 may be implemented as software or firmware or hardware or a combination thereof.

In some embodiments, the driver circuit 302 is further configured to generate a configuration request queue (e.g., the configuration request queue 200 in Fig. 2) comprising a plurality of switch configuration requests (including the switch configuration request 306) and provide the plurality of switch configuration requests in a sequence to the switching circuit 304. In some embodiments, each of the switch configuration requests (e.g., the switch configuration request 1, the switch configuration request 2 and the switch configuration request 3 in Fig. 2) associated with the configuration request queue are configured to configure the switching circuit 304 with a corresponding switching rule.

In some embodiments, a switching rule may comprise an indication on "what operation to execute" and "how to use an incoming data packet". In particular, in some embodiments, the switching rule may include the operation (e.g., forward, drop etc.) to be executed on an incoming network data packet (e.g., the incoming network data packet 308) and one or more identifiers associated with the incoming network data packet (e.g., specific fields like MAC address, IP address, VLAN tags etc. or other unique information) based on which the operation associated with the switching rule is to be applied. In order to implement the switching rule, in some embodiments, the driver circuit 302 is further configured to supply real values for the relevant fields (e.g., MAC addresses, IP addresses etc.) that is required for the implementation of a specific switching rule, as part of the switch configuration request 306. Therefore, in some embodiments, the switch configuration request 306 comprises a configuration command (e.g., the configuration command 202a in Fig. 2) comprising information on a switching rule associated with the network switch circuit 300, and a configuration template (e.g., the configuration template 202b in Fig. 2) comprising a real packet header comprising real values for one or more fields required for the execution of the switching rule associated with the configuration command. In some embodiments, the configuration template is indicative of a real network data packet format.

In some embodiments, the configuration command comprises a plurality of fields, for example, a rule ID that identifies the switching rule associated with the configuration command and a command type (e.g., ADD, REMOVE, UPDATE etc.) indicative of an operation that manages the respective switching rule. In some embodiments, the switching rule identifies a specific field (e.g., MAC address, IP address, VLAN tags etc.) or a combination of fields in the incoming network packet based on which the switching rule is to be implemented. In some embodiments, the configuration command further comprises one or more unique information fields configured to give additional information like direction of the incoming packet, when the switching rule is based on this additional information. In some embodiments, the configuration template may be configured to include real values for the one or more specific fields identified within the switching rule, in order to enable the switching circuit 304 to implement the switching rule.

Upon receiving the switch configuration request 306, the switching circuit 304 is configured to process the switch configuration request 306, in order to implement the switching rule associated therewith on an incoming data packet (e.g., the incoming network data packet 308). In some embodiments, the switching circuit 304 comprises a fetch circuit 304a configured to receive the configuration command and the configuration template comprised in the switch configuration request 306. In some embodiments, the switching circuit 304 further comprises a parsing circuit 304b configured to extract the values associated with the one or more relevant fields of the configuration template. In some embodiments, the parsing circuit 304b comprises a hardware parser. In some embodiments, the switching circuit 304 further comprises a rule execution circuit 304c configured to receive the configuration command from the fetch circuit 304a and the extracted values of the one or more relevant fields associated with configuration template from the parsing circuit 304, and process the configuration command. Upon processing the configuration command, the rule execution circuit 304c is further configured to apply the switching rule associated with the configuration command to the incoming network data packet (e.g., the incoming network data packet 308), based on the extracted values. In some embodiments, applying the switching rule to the incoming network data packet comprises determining whether a match exists between the one or more relevant fields (e.g., MAC address field) extracted from the configuration template and respective fields (e.g., MAC address field) associated with the incoming data packet, and applying an operation associated with the switching rule to the incoming network data packet (e.g., forward the network data packet to a port having MAC address indicated within the MAC address field of the incoming network data packet), when the match is determined.

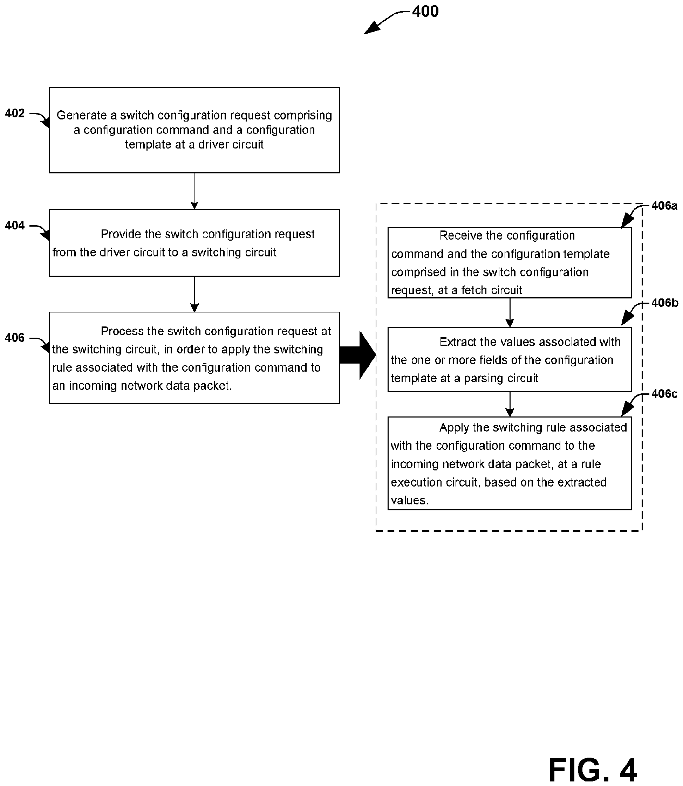

Fig. 4 illustrates a flow chart of a method 400 for a network switch circuit, according to one embodiment of the disclosure. The method 400 is explained herein with reference to the network switch circuit 300 in Fig. 3 and the configuration queue 200 in Fig. 2. However, the method 400 is equally applicable to the network switch circuit 100 in Fig. 1 and to any other network switch circuits associated with communication networks. At 402, a switch configuration request (e.g., the switch configuration request 306 in Fig. 3) is generated at the driver circuit 302. In some embodiments, the switch configuration request is generated at the driver circuit 302 based on information received from higher layers. In some embodiments, the switch configuration request comprises a configuration command (e.g., the configuration command 202a in Fig. 2) comprising information on a switching rule associated with the network switch circuit and a configuration template (e.g., the configuration template 202b in Fig. 2) comprising a real packet header comprising real values for one or more fields required for the execution of the switching rule. In some embodiments, the configuration template is indicative of a real network data packet format. At 404, the switch configuration request is provided from the driver circuit 302 to the switching circuit 304. In some embodiments, the driver circuit 302 may also be configured to generate and provide a configuration request queue comprising a plurality of switch configuration requests in sequence to the switching circuit 304.

At 406, the switch configuration request is processed at the switching circuit 304, in order to apply the switching rule associated with the configuration command to an incoming network data packet. In some embodiments, in order to process the switch configuration request, at 406a, the configuration command and the configuration template comprised in the switch configuration request, are received at the fetch circuit 304a. Further, at 406b, the values associated with the one or more relevant fields of the configuration template, is extracted at the parsing circuit 304b. Furthermore, at 406c, the switching rule associated with the configuration command is applied to the incoming network data packet, at the rule execution circuit 304c, based on the extracted values. In some embodiments, applying the switching rule to the incoming network data packet comprises determining whether a match exists between the one or more relevant fields extracted from the configuration template and the respective fields associated with the incoming network data packet, at the rule execution circuit 304c, and applying the switching rule to the incoming network data packet, at the rule execution circuit 304c, when the match is determined.

While the methods are illustrated and described above as a series of acts or events, it will be appreciated that the illustrated ordering of such acts or events are not to be interpreted in a limiting sense. For example, some acts may occur in different orders and/or concurrently with other acts or events apart from those illustrated and/or described herein. In addition, not all illustrated acts may be required to implement one or more aspects or embodiments of the disclosure herein. Also, one or more of the acts depicted herein may be carried out in one or more separate acts and/or phases.

While the apparatus has been illustrated and described with respect to one or more implementations, alterations and/or modifications may be made to the illustrated examples without departing from the spirit and scope of the appended claims. In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the invention.

In particular regard to the various functions performed by the above described components (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

While the invention has been illustrated, and described with respect to one or more implementations, alterations and/or modifications may be made to the illustrated examples without departing from the spirit and scope of the appended claims. In particular regard to the various functions performed by the above described components or structures (assemblies, devices, circuits, systems, etc.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the invention.

Examples can include subject matter such as a method, means for performing acts or blocks of the method, at least one machine-readable medium including instructions that, when performed by a machine cause the machine to perform acts of the method or of an apparatus or system for concurrent communication using multiple communication technologies according to embodiments and examples described herein.
Example 1 is a network switch circuit comprising a switching circuit configured to receive a switch configuration request comprising a configuration command comprising information on a switching rule associated with the network switch circuit; and a configuration template comprising a real packet header comprising real values for one or more fields required for the execution of the switching rule, wherein the configuration template is indicative of a real network data packet format; and process the switch configuration request, in order to apply the switching rule associated with the configuration command to an incoming network data packet.
Example 2 is a network switch circuit, including the subject matter of example 1, further comprising a driver circuit configured to provide the switch configuration request to the switching circuit.
Example 3 is a network switch circuit, including the subject matter of examples 1-2, including or omitting elements, wherein the driver circuit is further configured to generate a configuration request queue comprising a plurality of switch configuration requests and provide the plurality of switch configuration requests in sequence to the network switch circuit.
Example 4 is a network switch circuit, including the subject matter of examples 1-3, including or omitting elements, wherein the driver circuit is further configured to generate the switch configuration request, prior to providing the switch configuration request to the network switch circuit.
Example 5 is a network switch circuit, including the subject matter of examples 1-4, including or omitting elements, wherein the switching circuit comprises a fetch circuit configured to receive the configuration command and the configuration template comprised in the switch configuration request; and a parsing circuit configured to extract the values associated with the one or more fields of the configuration template.
Example 6 is a network switch circuit, including the subject matter of examples 1-5, including or omitting elements, wherein the switching circuit further comprises a rule execution circuit configured to receive the configuration command from the fetch circuit and the extracted values of the one or more fields associated with configuration template from the parsing circuit; process the configuration command; and apply the switching rule associated with the configuration command to the incoming network data packet, based on the extracted values.
Example 7 is a network switch circuit, including the subject matter of examples 1-6, including or omitting elements, wherein applying the switching rule comprises determining whether a match exists between the one or more fields extracted from the configuration template and respective fields associated with the incoming data packet and applying the switching rule to the incoming network data packet, when the match is determined.
Example 8 is a network switch circuit, including the subject matter of examples 1-7, including or omitting elements, wherein the information on the switching rule comprised in the configuration command comprises a rule ID that identifies the switching rule associated with the configuration command; and a command type indicative of an operation that manages the respective switching rule.
Example 9 is a network switch circuit, including the subject matter of examples 1-8, including or omitting elements, wherein the one or more fields comprised in the configuration template comprises fields associated with one or more of media access control (MAC) addresses, virtual local area network (VLAN) tags and internet protocol (IP) addresses.
Example 10 is a network switch circuit comprising a driver circuit configured to generate a switch configuration request comprising a configuration command comprising information on a switching rule associated with the network switch circuit; and a configuration template comprising a real packet header comprising real values for one or more fields required for the execution of the switching rule, wherein the configuration template is indicative of a real network data packet format; and provide the switch configuration request to a switching circuit, in order to execute the switching rule associated with the switch configuration request, thereby enabling to configure the network switch circuit.
Example 11 is a network switch circuit, including the subject matter of example 10, wherein the driver circuit is further configured to generate a configuration request queue comprising a plurality of switch configuration requests and provide the plurality of switch configuration requests in sequence to the network switch circuit.
Example 12 is a network switch circuit, including the subject matter of examples 10-11, including or omitting elements, wherein the information on the switching rule comprised in the configuration command comprises a rule ID that identifies the switching rule associated with the configuration command; and a command type indicative of an operation that manages the respective switching rule.
Example 13 is a network switch circuit, including the subject matter of examples 10-12, including or omitting elements, wherein the one or more fields comprised in the configuration template comprises fields associated with one or more of media access control (MAC) addresses, virtual local area network (VLAN) tags and internet protocol (IP) addresses.
Example 14 is a network switch circuit, including the subject matter of examples 10-13, including or omitting elements, further comprising the switching circuit configured to receive the switch configuration request; and process the switch configuration request, in order to apply the switching rule associated with the switch configuration request to an incoming network data packet.
Example 15 is a network switch circuit, including the subject matter of examples 10-14, including or omitting elements, wherein the switching circuit comprises a fetch circuit configured to receive the configuration command and the configuration template comprised in the switch configuration request; and a parsing circuit configured to extract the values associated with the one or more fields of the configuration template.
Example 16 is a network switch circuit, including the subject matter of examples 10-15, including or omitting elements, wherein the switching circuit further comprises a rule execution circuit configured to receive the configuration command and the extracted values from the one or more fields associated with configuration template; process the configuration command; and apply the switching rule associated with the configuration command to the incoming network data packet.
Example 17 is a network switch circuit, including the subject matter of examples 10-16, including or omitting elements, wherein applying the switching rule comprises determining whether a match exists between the one or more fields extracted from the configuration template and respective fields associated with the incoming data packet and applying the switching rule to the incoming network data packet, when the match is determined.
Example 18 is a method for a network switch circuit comprising receiving, at a switching circuit, a switch configuration request comprising a configuration command comprising information on a switching rule associated with the network switch circuit; and a configuration template comprising a real packet header comprising real values for one or more fields required for the execution of the switching rule, wherein the configuration template is indicative of a real network data packet format; and processing, at the switching circuit, the switch configuration request, in order to apply the switching rule to an incoming network data packet.
Example 19 is a method, including the subject matter of examples 18, further comprising, providing from a driver circuit, the switch configuration request to the switching circuit.
Example 20 is a method, including the subject matter of examples 18-19, including or omitting elements, wherein processing the switch configuration request comprises receiving the configuration command and the configuration template comprised in the switch configuration request, at a fetch circuit; extracting the values associated with the one or more fields of the configuration template, at a parsing circuit; and applying the switching rule to the incoming network data packet, at a rule execution circuit, based on the extracted values.
Example 21 is a method, including the subject matter of examples 18-20, including or omitting elements, wherein applying the switching rule to the incoming network data packet comprises determining whether a match exists between the one or more fields extracted from the configuration template and respective fields associated with the incoming network data packet, at the rule execution circuit; and applying the switching rule to the incoming network data packet, at the rule execution circuit, when the match is determined.

Various illustrative logics, logical blocks, modules, and circuits described in connection with aspects disclosed herein can be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform functions described herein. A general-purpose processor can be a microprocessor, but, in the alternative, processor can be any conventional processor, controller, microcontroller, or state machine.

The above description of illustrated embodiments of the subject disclosure, including what is described in the Abstract, is not intended to be exhaustive or to limit the disclosed embodiments to the precise forms disclosed. While specific embodiments and examples are described herein for illustrative purposes, various modifications are possible that are considered within the scope of such embodiments and examples, as those skilled in the relevant art can recognize.

In this regard, while the disclosed subject matter has been described in connection with various embodiments and corresponding Figures, where applicable, it is to be understood that other similar embodiments can be used or modifications and additions can be made to the described embodiments for performing the same, similar, alternative, or substitute function of the disclosed subject matter without deviating therefrom. Therefore, the disclosed subject matter should not be limited to any single embodiment described herein, but rather should be construed in breadth and scope in accordance with the appended claims below.

In particular regard to the various functions performed by the above described components (assemblies, devices, circuits, systems, *etc*.), the terms (including a reference to a "means") used to describe such components are intended to correspond, unless otherwise indicated, to any component or structure which performs the specified function of the described component (e.g., that is functionally equivalent), even though not structurally equivalent to the disclosed structure which performs the function in the herein illustrated exemplary implementations of the disclosure. In addition, while a particular feature may have been disclosed with respect to only one of several implementations, such feature may be combined with one or more other features of the other implementations as may be desired and advantageous for any given or particular application.

## Claims

1. A network switch circuit comprising:
a switching circuit configured to:
receive a switch configuration request comprising:
a configuration command comprising information on a switching rule associated with the network switch circuit; and
a configuration template comprising a real packet header comprising real values for one or more fields required for the execution of the switching rule, wherein the configuration template is indicative of a real network data packet format; and
process the switch configuration request, in order to apply the switching rule associated with the configuration command to an incoming network data packet.

2. The network switch circuit of claim 1, further comprising a driver circuit configured to provide the switch configuration request to the switching circuit.

3. The network switch circuit of claim 2, wherein the driver circuit is further configured to generate a configuration request queue comprising a plurality of switch configuration requests and provide the plurality of switch configuration requests in sequence to the network switch circuit.

4. The network switch circuit of any of the claims 2-3, wherein the driver circuit is further configured to generate the switch configuration request, prior to providing the switch configuration request to the network switch circuit.

5. The network switch circuit of any of the claims 1-4, wherein the switching circuit comprises:
a fetch circuit configured to receive the configuration command and the configuration template comprised in the switch configuration request; and
a parsing circuit configured to extract the values associated with the one or more fields of the configuration template.

6. The network switch circuit of claim 5, wherein the switching circuit further comprises a rule execution circuit configured to:
receive the configuration command from the fetch circuit and the extracted values of the one or more fields associated with configuration template from the parsing circuit;
process the configuration command; and
apply the switching rule associated with the configuration command to the incoming network data packet, based on the extracted values.

7. The network switch circuit of claim 6, wherein applying the switching rule comprises:
determining whether a match exists between the one or more fields extracted from the configuration template and respective fields associated with the incoming data packet; and
applying the switching rule to the incoming network data packet, when the match is determined.

8. The network switch circuit of any of the claims 1-7, wherein the information on the switching rule comprised in the configuration command comprises:
a rule ID that identifies the switching rule associated with the configuration command; and
a command type indicative of an operation that manages the respective switching rule.

9. The network switch circuit of any of the claims 1-8, wherein the one or more fields comprised in the configuration template comprises fields associated with one or more of media access control (MAC) addresses, virtual local area network (VLAN) tags and internet protocol (IP) addresses.

10. A method for a network switch circuit comprises:
generating, at a driver circuit, a switch configuration request comprising:
a configuration command comprising information on a switching rule associated with the network switch circuit; and
a configuration template comprising a real packet header comprising real values for one or more fields required for the execution of the switching rule, wherein the configuration template is indicative of a real network data packet format; and
providing, from the driver circuit, the switch configuration request to a switching circuit, in order to execute the switching rule associated with the switch configuration request, thereby enabling to configure the network switch circuit.

11. The method of claim 10, further comprising generating, at the driver circuit, a configuration request queue comprising a plurality of switch configuration requests and providing, from the driver circuit, the plurality of switch configuration requests in sequence to the network switch circuit.

12. The method of any of the claims 10-11, wherein the information on the switching rule comprised in the configuration command comprises:
a rule ID that identifies the switching rule associated with the configuration command; and
a command type indicative of an operation that manages the respective switching rule.

13. The method of any of the claims 10-12, further comprising:
receiving, at the switching circuit, the switch configuration request; and
processing, at the switching circuit, the switch configuration request, in order to apply the switching rule associated with the switch configuration request to an incoming network data packet.

14. The network switch circuit of claim 13, wherein processing the switch configuration request at the switching circuit comprises:
receiving, at a fetch circuit, the configuration command and the configuration template comprised in the switch configuration request; and
extracting the values associated with the one or more fields of the configuration template, at a parsing circuit.

15. The network switch circuit of claim 14, wherein processing the switch configuration request at the switching circuit further comprises:
receiving, at a rule execution circuit, the configuration command and the extracted values from the one or more fields associated with configuration template;
processing the configuration command at the rule execution circuit; and
applying the switching rule associated with the configuration command to the incoming network data packet, at the rule execution circuit.
